# EUROPÄISCHE PATENTSCHRIFT

(11) **EP 0 953 085 B1**
(45) Veröffentlichungstag und Bekanntmachung des Hinweises auf die Patenterteilung: **19.06.2002**
(21) Anmeldenummer: 98900470.0
(22) Anmeldetag: 09.01.1998
(51) Int. Cl.: E04B 1/76

(54) **VERFAHREN ZUR BEHANDLUNG NATÜRLICHER ROHSTOFFE FÜR DIE HERSTELLUNG VON DÄMMSTOFFEN**
PROCESS FOR TREATING NATURAL RAW MATERIALS FOR PRODUCING HEAT INSULATING MATERIALS
PROCEDE POUR TRAITER DES MATIERES PREMIERES NATURELLES AFIN DE PRODUIRE DES MATIERES CALORIFUGES

(30) Priorität: 10.01.1997 AT 1597 U
(43) Veröffentlichungstag der Anmeldung: 03.11.1999
(73) Patentinhaber: Wolfinger, Eduard Franz, 4522 Sierning (AT); Walchshofer, Josef, 4522 Sierning (AT)
(72) Erfinder: Wolfinger, Eduard Franz, 4522 Sierning (AT); Walchshofer, Josef, 4522 Sierning (AT)
(74) Vertreter: Secklehner, Günter, Dr.
(86) Internationale Anmeldenummer: AT9800001
(87) Internationale Veröffentlichungsnummer: WO9830763

(56) Entgegenhaltungen:
- DE-A- 19 541 626
- GB-A- 1 418 882
- US-A- 2 470 641
- US-A- 4 280 538
- US-A- 4 350 001
- US-A- 4 852 219

## Beschreibung

Die Erfindung betrifft ein Verfahren zur Herstellung eines Dämmstoffes aus insbesondere natürlichen Rohstoffen gemäß Anspruch 1 und einen Formkörper aus insbesondere natürlichen Rohstoffen für die Bildung einer Dämmschicht gemäß Anspruch 28.

Aus der US 4,280,538 A ist einleitend ein Verfahren zur Handhabung und Verpackung von lockerem Wärmedämmaterial aus faserartigen Materialien, insbesondere aus Zellulosefasern, bekannt. Demgemäß wird üblicherweise Altpapier zerkleinert und chemisch behandelt, sodaß daraus eine flaumig weiche, faserige Masse entsteht. Das Volumen der flauschigen Zellulosemasse kann in einem anschließenden Verpackungsvorgang um das Vier- oder Fünffache gegenüber dem Herstellungsvolumen reduziert werden. Das in etwa zu sackgroßen Einheiten verpackte, schüttgutähnliche Zellulosematerial wird dann am Anwendungsort mittels einer Gebläsevorrichtung weiter aufgelockert, wobei die Gebläsevorrichtung das Zellulosematerial zudem in die zu dämmenden Bereiche fördert, welche typischerweise durch den Dachbereich eines Gebäudes gebildet sind. Die Gebläsevorrichtung vergrößert dabei das Volumen und damit auch das Wärmedämmvermögen des flockigen Zellulosedämmstoffes. Mit der beschriebenen Verpackungsmaschine für faserartiges Dämmaterial sollen die dargelegten Probleme bei der Verpackung des verdichtbaren, faserartigen Materials gelöst werden. Der zu Verarbeitungseinheiten verpackte, flockenartige Zellulosedämmstoff ist aber dennoch verhältnismäßig großvolumig und wirft daher für eine Wärmedämmung großflächiger Bereiche, wie z.B. von ganzen Gebäuden, bei der maschinellen bzw. manuellen Verarbeitung nicht zuletzt aufgrund der Zerfallsneigung ohne Verpackung Transport- und Handhabungsschwierigkeiten auf.

In der US 4,350,001 A ist ein Verfahren zur Behandlung von anorganischen Faserprodukten in Art von Glas- bzw. Mineralwolle für die Wärme- bzw. Schalldämmung beschrieben. Dabei wird vorgeschlagen, die anorganischen Fasern zu trocknen und mit einem reibungsvermindernden Zusatz, bevorzugt Silikonöl, zu behandeln. Gegebenenfalls können die anorganischen Fasern auch einem Kühl- bzw. Gefrierprozeß unterzogen werden. Anschließend wird das derart behandelte Produkt in einem Verpackungsvorgang mit einem luft- und feuchtigkeitsdichten Material umschlossen, der Innenraum evakuiert und die resultierende Verpackung abgedichtet, sodaß das Volumen des behandelten Produktes in etwa um ein Drittel verringert wird. Durch die vorgenannten Behandlungsmaßnahmen soll das verpackte Dämmaterial nach dem Öffnen der Verpackung im wesentlichen wieder sein ursprüngliches Volumen einnehmen. Nachteilig ist dabei, daß eine Reihe kostenintensiver Behandlungsmaßnahmen erforderlich sind, um das Volumen des anorganischen Dämmaterials zu reduzieren und daß die Volumsverkleinerung über das Verpackungsmaterial aufrechterhalten werden muß.

Aus der GB 1 418 882 A ist ein weiteres Verfahren zur Verpackung von elastisch nachgiebigem Wärmedämmaterial, insbesondere von Mineral- bzw. Steinwolle bekannt. Dabei wird das eingeschränkt elastische Dämmaterial in eine erste luftdichte Umhüllung aus einem flexiblen Kunststoffmaterial verbracht und in dieser Umhüllung ein Unterdruck, beispielsweise mittels einer Vakuumpumpe, erzeugt, sodaß das nachgiebige Dämmaterial komprimiert wird. Diese aus dem Dämmaterial und der Umhüllung bestehende, evakuierte Packung wird nachfolgend in eine zweite, geringfügig größere Hülle aus einem flexiblen Kunststoffmaterial gesteckt und die Expandierung des Dämmaterials in der ersten Packung, beispielsweise durch eine teilweise Freisetzung des Vakuums in der ersten Verpackung, eingeleitet. Nachteilig ist dabei, daß das doppelt verpackte Wärmedämmaterial eine verhältnismäßig große Menge an zu entsorgendem Kunststoffmaterial verursacht und nur eine unzureichende Volumsverkleinerung erzielt werden kann um nicht die Wärmedämmeigenschaften dauerhaft zu beeinträchtigen.

Aus der AU 50 265/93 A ist Dämmaterial aus Zellulose zur Wärmedämmung bekannt, welches in Form von unregelmäßigen Bruchstücken aus verpreßtem Zellulosematerial in Hohlräume eingebracht wird. Zur Herstellung dieses Dämmaterials wird Zeitungspapier oder anderes Zellulosematerial zerkleinert und mit Klebstoffen auf Wasserbasis und Chemikalien vermischt, bis eine pasten- oder teigähnliche Konsistenz erreicht ist. Dieses teigförmige Gemenge wird zu größeren Klumpen, Leisten oder Kugeln mit bis zu einigen Kilogramm an Gewicht geformt. Diese Formkörper werden einer Trockenund Brechvorrichtung zugeführt, um diese Formkörper größerer Abmessungen in eine Vielzahl unregelmäßig großer Fragmente aufzusplitten. Diese Fragmente weisen daher unregelmäßige und bruchstückhafte Formen mit von den Oberflächen abstehenden Fasern auf. Anschließend kann diesen Fragmenten in einem weiteren Trocknungsprozeß zusätzliche Feuchtigkeit entzogen werden. Weiters werden die unregelmäßigen, ungleich großen Fragmente mittels einer Siebvorrichtung sortiert bzw. in annähernd gleich große Fragmente getrennt. In einer nachfolgenden Mischstation werden unterschiedliche Größen der zuvor sortierten Fragmente in einem bestimmten Verhältnis vermischt. Insbesondere wird dadurch sichergestellt, daß das Mischungsverhältnis zwischen größeren und kleineren Fragmenten annähernd konstant bleibt bzw. im Dämmaterial immer ein gewisser Anteil an kleineren Fragmenten vorhanden ist. Diese Mischung unterschiedlich großer Fragmente aus Zellulose wird verpackt und als Dämmstoff in Hohlräume von Gebäuden eingebracht bzw. eingeblasen. Nachteilig ist dabei, daß diese Fragmente durch die Verpressung des Zellulosematerials bei der Herstellung relativ hohe Dichte aufweisen und dadurch im Vergleich zu Dämmaterial mit geringerer Dichte eine höhere Wärmeleitung bzw. schlechtere Wärmedämmung der Zellulosefragmente gegeben ist.

Weiters ist ein derzeit eingesetztes Verfahren zur Herstellung von Dämmaterial aus Zellulose bekannt, bei welchem Papierabfälle wie Tageszeitungspapier, Verlagsabfälle oder dergleichen vorzerkleinert und Borsalze zudosiert werden. Diese Komponenten werden in einem Mahlverfahren miteinander mechemisch verbunden und gemischt. Die Papierfasern verfilzen sich dabei zu dreidimensionalen Strukturen geringer Dichte. Diese lose Fasermischung wird verpackt und gelagert oder zu den Abnehmern transportiert. Die Borsalze schützen den flockenartigen Zellulosedämmstoff dabei vor Brand, Verrottung und Schädlingsbefall. Nachteilig ist hierbei, daß dieser flockenartige Zellulosedämmstoff verhältnismäßig großvolumig ist und daher die Handhabung desselben bei der maschinellen oder manuellen Verarbeitung Schwierigkeiten aufwirft.

Der vorliegenden Erfindung liegt die Aufgabe zugrunde, ein Verfahren zur Herstellung eines Dämmstoffes mit guten Wärmedämmeigenschaften und unkomplizierter Handhabung bzw. Verarbeitung zu schaffen. Unabhängig davon soll ein Formkörper aus insbesondere natürlichen Rohstoffen für die Bildung von Dämmschichten geschaffen werden, welcher die Kosten zur Wärmedämmung von Gebäuden reduziert.

Diese Aufgabe der Erfindung wird durch die Merkmale des Anspruches 1 und 28 gelöst. Vorteilhaft ist bei dieser Lösung, daß der kompakte, hochverdichtete Dämmstoff beim Transport auf Fördervorrichtungen, wie z.B. Förderbändern oder dergleichen, bzw. bei der Schwerkraftförderung oder Fallförderung zur Verpackung desselben, wesentlich weniger Staub entwickelt als loser, flockenartiger Dämmstoff. Dadurch kann in den meisten Fällen bei der Produktion des Dämmstoffes auf leistungsstarke und kostenintensive Absaug- bzw. Filtervorrichtungen verzichtet werden. Je nach Basismaterial des Dämmstoffes genügen zumeist einfache Staubmasken, um eine Gesundheitsgefährdung auszuschließen bzw. verträgliche Arbeitsbedingungen zu erhalten. Die hohe Verdichtung der Rohstoffe des Dämmstoffes erübrigt auch die Zugabe von Bindemitteln, da das verpreßte Dämmaterial schon aufgrund der innigen Verfilzung der einzelnen Fasern bzw. aufgrund der erhöhten Kohäsionskräfte die jeweilige Form beibehält. Somit entstehen keine zusätzlichen Kosten durch Bindemittel bzw. Klebstoffe bei der Herstellung des verdichteten Dämmstoffes. Auch die Verwendung von Wasser zur Erhöhung der Bindekräfte hätte eine kostenintensive Entsorgung bzw. Reinigung des überschüssigen, verschmutzten und gegebenenfalls mit Chemikalien oder Salzen versetzten Wassers zur Folge. Dazu kommt, daß durch diese Maßnahmen in einfacher Art und Weise die Lagerkosten für den Dämmstoff erheblich reduziert werden können bzw. in den gegebenen Lagerräumlichkeiten des Produzenten oder Händlers erheblich mehr Dämmstoff untergebracht werden kann. Zudem ergeben sich durch das komprimierte Dämmaterial erhebliche Transportkostenersparnisse. Vielmehr ist es dadurch möglich, mit wesentlich weniger LKW-Ladungen bzw. kleineren LKW's erheblich mehr Dämmaterial zu den Abnehmern zu transportieren, wodurch die Umwelt beim Vertrieb des Dämmaterials weniger belastet wird. Insbesondere können eigene Dämmstofftransporte entfallen, da mit den Fahrzeugen der Verarbeiter gleichzeitig das Dämmaterial für weitläufige Gebäudebereiche bzw. auch für gesamte Gebäudekomplexe transportiert werden kann. Unter Bedachtnahme des jährlichen Verbrauches an Dämmstoffen in Österreich von mehr als 2 Millionen m³ - wie einer Tabelle einer Fachzeitschrift zu entnehmen ist - wird mit dem erfindungsgemäßen Verfahren eine erhebliche Umweltentlastung durch Einsparung separater bzw. zusätzlicher Dämmstofftransporte und gleichzeitig eine Kostenreduktion des Dämmstoffes aufgrund von Lager- und Transportkostenersparnissen erreicht. Zudem ist die Lagerung des verdichteten Dämmstoffes beim Produzenten und/oder vor der Verarbeitung auf Baustellen vereinfacht, da eine Verstreuung des Dämmstoffes bzw. eine Staubentwicklung durch Zugluft verhindert ist und sich daher eigene Maßnahmen zum Schutz des Dämmstoffes vor unkontrollierter Zugluft erübrigen. Ein weiterer durch diese Maßnahmen erzielbarer, überraschender Vorteil liegt vor allem auch darin, daß der am Einsatzort annähernd auf das Ausgangsvolumen gebrachte, lockere, verfilzte Dämmstoff mit geringer Dichte bessere Wärmedämmwerte als rieselfähiger Dämmstoff mit pelletartiger Form bzw. als Dämmstoff aus einzelnen Körpern mit bruchstückähnlicher Form aufweist. Durch die geringe Teilchengröße des losen, lockeren Dammstoffes sind Hohlräume in der mit dem Dämmstoff gebildeten Dämmschicht bzw. über die gesamte Dicke der Dämmschicht verlaufende Kältebrücken ausgeschlossen, wodurch das Wärmedämmvermögen des Dämmstoffes grundsätzlich hoch liegt. Weiters ist in vorteilhafter Weise der Materialbedarf für eine Dämmschicht mit geringer Dichte des Dämmaterials kleiner als bei der Wärmedämmung mit verpreßtem Dämmaterial hoher Dichte. Zudem ist durch das niedrige Raumgewicht des lockeren Dämmstoffes die mechanische Belastung von Hohlräumen bzw. Wänden oder Decken vernachlässigbar klein.

Vorteilhaft sind auch die Maßnahmen nach Anspruch 2, da somit im wesentlichen keine Umwandlungsverluste bei der Umformung der Formkörper in Dämmstoff mit geringer Dichte auftreten.

Von Vorteil ist weiters ein Vorgehen nach Anspruch 3, da somit eine im wesentlichen setzungssichere Dämmschicht mit dem Dämmstoff geschaffen wird, wodurch die Wärmedämmwirkung stets gewahrt bleibt.

Mit den Maßnahmen nach Anspruch 4 wird in vorteilhafter Weise eine winddichte Dämmschicht mit dem Dämmstoff gebildet.

Eine im wesentlichen volumensbeständige Dämmschicht wird in vorteilhafter Weise mit den Maßnahmen nach Anspruch 5 erreicht.

Von Vorteil sind weiters die Maßnahmen nach Anspruch 6, da somit der für den jeweiligen Anwendungsfall am besten geeignete bzw. kostengünstigste Rohstoff verarbeitet werden kann.

Vorteilhafte Grundformen des Rohstoffes vor dessen Verdichtung zu Formkörpern sind in Anspruch 7 oder 8 gekennzeichnet.

Mit dem Vorgehen nach Anspruch 9 oder 10 werden in vorteilhafter Weise große Mengen an Rohstoffen aus Recyclingsammelstellen eingesetzt bzw. natürlich vorkommende Rohstoffe aus Landbau und Tierzucht verarbeitet.

Von Vorteil sind weiters die Maßnahmen nach Anspruch 11, da somit gewisse Eigenschaften des Dämmstoffes, wie z.B. der Wärmedämmwert und/oder die Verfallsbeständigkeit, an die jeweiligen Einsatzbedingungen angepaßt werden können.

Ein vorteilhaftes Verfahren zur Umformung der Formkörper in losen, lockeren Dämmstoff ist im Anspruch 12 beschrieben.

Von Vorteil ist auch ein Vorgehen nach Anspruch 13, da dadurch die Eigenschaften des Roh- bzw. Dämmstoffes vielfältig verändert bzw. angepaßt werden können.

Von Vorteil sind dabei die Maßnahmen nach Anspruch 14, da somit ein wasserabweisender Dämmstoff bzw. eine setzungsichere Dämmschicht geschaffen wird.

Mit dem Vorgehen nach Anspruch 15 wird in einfacher Art und Weise die Brennbarkeit der Rohstoffe bzw. des Dämmstoffes herabgesetzt.

Mit den Maßnahmen nach Anspruch 16 wird in einfacher Art und Weise den jeweils gültigen Vorschriften bezüglich Feuerbeständigkeit bzw. Brandhemmung des Dämmstoffes Rechnung getragen.

Mit dem Vorgehen nach Anspruch 17 werden in vorteilhafter Weise pflanzliche und/oder tierische Schädlinge im Rohstoff bzw. im Dämmstoff bekämpft, und somit die Qualität des Dämmstoffes erhöht bzw. längerfristig beibehalten.

Vorteilhaft sind weiters die Maßnahmen nach Anspruch 18, da dadurch die Qualität des produzierten Dämmstoffes auch bei widrigen Lagerungsverhältnissen nicht beeinträchtigt wird.

Anspruch 19 beschreibt eine einfache, jedoch wirkungsvolle und problemlose Art der Umformung der Formkörper in losen, lockeren Dämmstoff.

Mit dem Vorgehen nach Anspruch 20 wird in vorteilhafter Weise, gleichzeitig mit der Umformung der Formkörper in lockeren Dämmstoff mit geringer Dichte, die Beförderung des Dämmstoffes in die zu dämmenden Hohlräume bzw. zu den zu dämmenden Flächen, ohne eigene Fördervorrichtungen wie z.B. Gebläseförderer, bewerkstelligt. Darüber hinaus wird eine effiziente und besonders störungsfreie Beförderung des flockenartigen, leichten Dämmstoffes erreicht und aufgrund der kontinuierlichen Beschickung der Hohlräume mit dem Dämmstoff eine lückenlose Dämmschicht gebildet.

Mit dem Vorgehen nach Anspruch 21 wird in vorteilhafter Weise die Bindekraft des aufzubringenden Dämmstoffes erhöht, wodurch in lediglich einem Arbeitsgang im wesentlichen senkrechte Flächenbereiche bzw. Wände rasch und wirkungsvoll wärmegedämmt werden können.

Es ist auch ein Vorgehen nach Anspruch 22 von Vorteil, da dadurch bei der Verarbeitung des Dämmstoffes keine separaten Arbeitsschritte erforderlich sind und dadurch in vorteilhafter Weise eine verfahrensbedingte Verteuerung des Dämmstoffes vermieden ist.

Es ist aber auch ein Vorgehen nach Anspruch 23 von Vorteil, da derartige Formkörper einfach zu bilden sind und bei einer Ausschüttung aus Verpackungseinheiten mengenmäßig leicht zu dosieren sind.

Vorteilhaft ist auch ein Vorgehen nach Anspruch 24, da dadurch die Qualität bzw. Beständigkeit des Dämmstoffes mit einfachen Mitteln über lange Zeiträume hinweg beibehalten werden kann.

Von Vorteil ist weiters eine Maßnahme nach Anspruch 25 da somit das Wärmedämmvermögen der aus den Formkörpern gebildeten Dämmschicht am Höchsten ist, und die mechanische Belastung der wärmegedämmten Hohlräume bzw. Wände oder Decken relativ niedrig bleibt. Zudem ist der Material- bzw. Rohstoffbedarf zur Wärmedämmung verhältnismäßig gering.

Mit den Maßnahmen nach Anspruch 26 oder 27 ist der Gesamtkostenaufwand zur Wärmedämmung bestimmter Räumlichkeiten entsprechend reduziert.

Die Erfindung umfaßt weiters auch einen Formkörper aus insbesondere natürlichen Rohstoffen für die Bildung einer Dämmschicht, gemäß Anspruch 28.

Dieser Formkörper aus insbesondere natürlichen Rohstoffen für die Bildung einer Dämmschicht ist durch die Merkmale des Anspruches 28 gekennzeichnet. Vorteilhaft ist bei dieser überraschend einfach erscheinenden Lösung, daß die Gestehungskosten des Dämmstoffes aufgrund niedrigerer Transport- und/oder Lagerkosten reduziert sind, und dieser Kostenvorteil an die Abnehmer bzw. die Endverbraucher des Dämmstoffes weitergegeben werden kann.

Von Vorteil ist dabei eine Ausführung nach Anspruch 29, da somit die Formbeständigkeit der Formkörper auch ohne Beigabe von Bindemitteln einzig durch die Vernadelung bzw. Verfilzung und Verdichtung der Grundkomponenten der Formkörper gewährleistet ist.

Mit der Ausbildung nach Anspruch 30 stehen in vorteilhafter Weise vielfältige und nahezu unerschöpfliche Rohstoffquellen zur Verfügung.

Die vorteilhafte Ausbildung nach Anspruch 31 oder 32 eröffnet in vorteilhafter Weise zusätzliche Einsatzgebiete für die Produkte aus Landbau und/oder Tierzucht.

Zum besseren Verständnis des erfindungsgemäßen Verfahrens wird dieses im nachfolgenden anhand eines Beispiels näher erläutert.

Es zeigen:
- Fig. 1: ein Ablaufdiagramm des erfindungsgemäßen Verfahrens mit den wesentlichsten Schritten in vereinfachter und schematischer Darstellung;
- Fig. 2: die Fortsetzung zum Ablaufdiagramm in Fig. 1;
- Fig. 3: ein nach dem erfindungsgemäßen Verfahren hergestellter Formkörper in schaubildlicher Darstellung.

Einführend sei festgehalten, daß in den unterschiedlich beschriebenen Verfahrensabläufen gleiche Schritte mit gleichen Bezugszeichen versehen werden, wobei die in der gesamten Beschreibung enthaltenen Offenbarungen sinngemäß auf gleichen, Schritte mit gleichen Bezugszeichen übertragen werden können. Weiters können auch Einzelmerkmale aus den gezeigten, unterschiedlichen Verfahrensabläufen für sich eigenständige, erfindungsgemäße Lösungen darstellen.

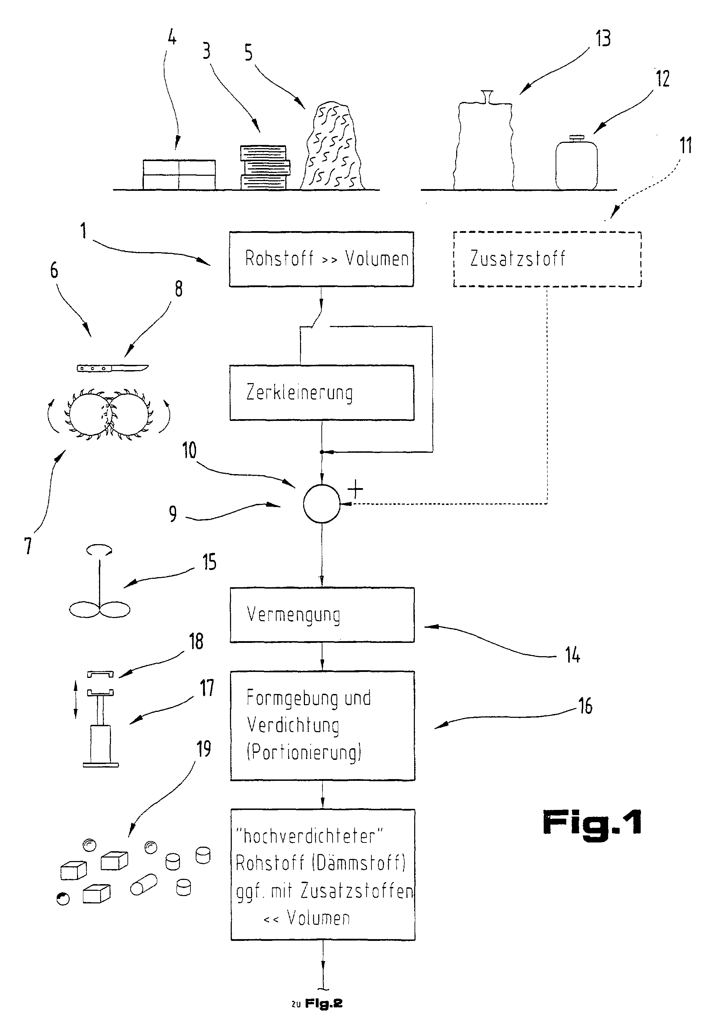

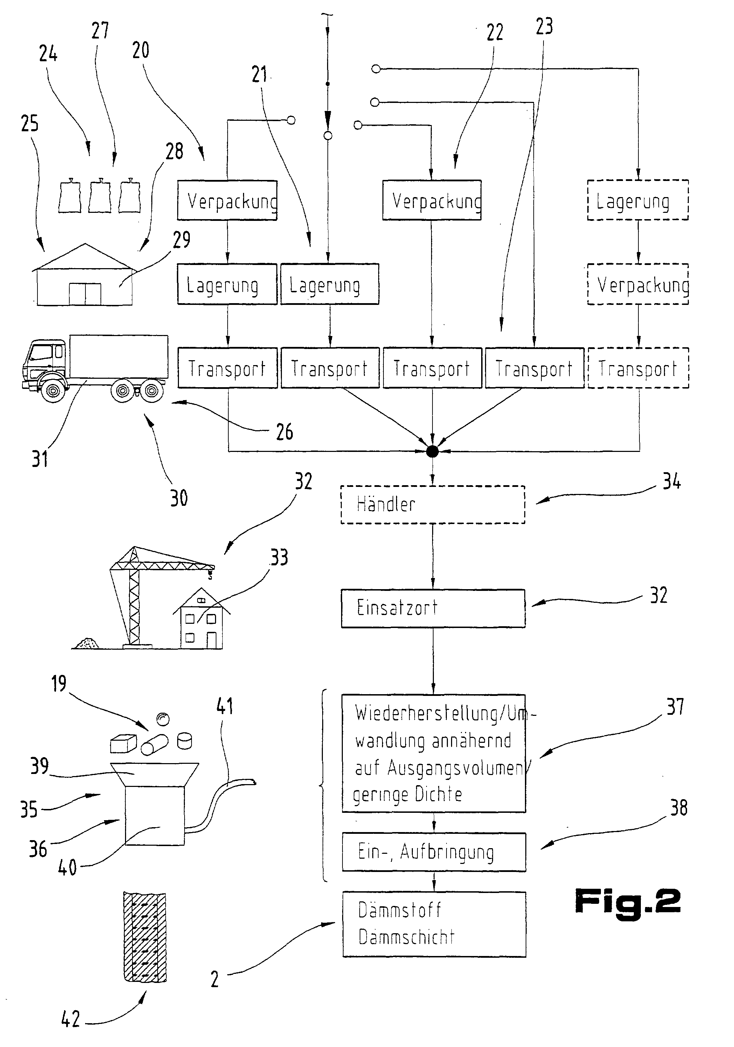

In den Fig. 1 und 2 ist der prinzipielle Ablauf des erfindungsgemäßen Verfahrens zur Behandlung natürlicher Werkstoffe bzw. Rohstoffe 1 für die Herstellung von Dämmstoffen 2 gezeigt, wobei Fig. 2 die Fortsetzung zu Fig. 1 darstellt. Als Rohstoff 1 bzw. als Basismaterial für den Dämmstoff 2 kann Zellulose 3, z.B. in Form von Papierabfällen, Verlagsabfällen oder Papier aus Recyclingsammelstellen, Verwendung finden. Weiters kann als Rohstoff 1 Kokosfaser, Schilf, Stroh 4, Hanf, Flachs, Baumwolle, Schafwolle 5 oder ein ähnlicher bevorzugt natürlicher Rohstoff 1 mit geringem Raumgewicht und guten Wärmedämmeigenschaften eingesetzt werden.

Je nach Vorliegen des zu verarbeitenden Rohstoffes 1 kann dieser einer Zerkleinerungsvorrichtung 6 zugeführt werden. In Abhängigkeit von Form und Festigkeit des Rohstoffes 1 können hierfür Shredder 7, Mühlen, Schneidvorrichtungen 8, Häcksler, Hacker oder dgl. eingesetzt werden. Der Rohstoff 1 nimmt dabei die Form von Fasern und/oder Fäden und/oder Flocken und/oder Streifen an.

Dem fallweise zerkleinerten Rohstoff 1 - symbolisch durch einen Umschalter angedeutet - werden an einer Beigabestelle 9, bevorzugt gebildet durch einen Behälter 10, Zusatzstoffe 11 zugesetzt. Diese Zusatzstoffe 11 schützen den in weiterer Folge als Dämmstoff 2 verwendeten, zerkleinerten Rohstoff 1 vor Ungezieferfraß und Schimmelpilzbefall. Neben dieser Konservierung können sich diese Zusatzstoffe 11 auch brandhemmend auf den Rohstoff 1 auswirken. Als Zusatzstoff 11 wird dabei bevorzugt Borax, Borsäure 12, Borsalz 13, Kalk, Steinmehl, Melamin usw. eingesetzt. Mineralische oder natürliche Öle bzw. Fette, Silikone, Wachse oder andere hydrophobe Mittel als Zusatzstoff 11 können zur Hydrophobierung des Dämmstoffes 2 dem Rohstoff 1 zugesetzt werden. Zur Bekämpfung von pflanzlichen und/oder tierischen Schädlingen können dem Rohstoff 1 bzw. dem Dämmstoff 2 auch Herbizide und/oder Pestizide zugesetzt werden. Um die Kriterien des Brandschutzes zu erfüllen, ist es auch möglich, daß ein Teil der Rohstoffe 1 brandhemmend oder nicht entflammbar ist und/oder die Rohstoffe 1 mit einer brandhemmenden oder nicht entflammenden Beschichtung versehen werden. Diese vorgenannten Zusatzstoffe 11 können dabei allein oder in Kombination miteinander Verwendung finden.

Die Zusatzstoffe 11 werden mittels einer Mischvorrichtung 14, bevorzugt in Art eines Rühroder Umwälzwerkes 15, im Rohstoff 1 gleichmäßig verteilt. Selbstverständlich ist es auch möglich, den Zusatzstoff 11 dem Rohstoff 1 kontinuierlich während des Vermengungsvorganges beizugeben.

Gleichfalls ist es möglich, die Zusatzstoffe 11 vor der bzw. im Zuge der Einbringung am Einsatzort dem Dämmstoff 2 zuzusetzen. Weiters können die Zusatzstoffe 11 vor dem Verdichten des Rohstoffes 1 und/oder vor dem Zerkleinern der Festkörper zugesetzt werden.

Dieser derart behandelte Rohstoff 1 weist materialbedingt bzw. auch aufgrund der Zerkleinerung und Vermengung relativ geringe Dichte auf. Diese großvolumige, in loser Form vorlie- gende Rohstoffmasse wird einer Formgebungs- und Verdichtungsvorrichtung 16, bevorzugt in Art hydraulischer oder pneumatischer Pressen 17 mit entsprechenden Formwerkzeugen 18, zugeführt. Der großvolumige, lose Rohstoff 1 mit geringer Dichte wird dadurch zu hochverdich- teten Formkörpern 19 mit vergleichsweise höherer Dichte und geringerem Volumen verpreßt. Das Verkleinerungsverhältnis zwischen dem Ausgangsvolumen einer bestimmten Menge des Rohstoffes 1 und dem Volumen dieser Rohstoffmenge nach der Verdichtung beträgt dabei zumindest 5:1 bis 30:1, bevorzugt 10:1 bis 25:1. Durch die 5-fache bis 30-fache, bevorzugt die 10-fache bis 25-fache, Verkleinerung des Ausgangsvolumens des Rohstoffes 1 zu hochverdichteten Formkörpern 19 wird der Raumbedarf einer bestimmten Menge an Rohstoff 1 bzw. Dämmstoff 2 entsprechend reduziert.

Beziehungsweise beträgt die Dichte der Formkörper 19 das 5-fache bis 30-fache, bevorzugt das 10-fache bis 25-fache, der Ausgangsdichte des Rohstoffes 1 und/oder beträgt deren Volumen zwischen 3 % bis 20 %, bevorzugt 4 % bis 10 %, des Ausgangsvolumens des Rohstoffes 1.

Das Raumgewicht bzw. die Dichte der Formkörper 19 beträgt dabei, je nach eingesetztem Rohstoff 1, zwischen 400 kg/m3 und 900 kg/m3.

Die hohe Verdichtung des Rohstoffes 1 durch die Formgebungs- und Verdichtungsvorrichtung 16 erübrigt insbesondere bei zellulosehältigen Rohstoffen 1, wie Papierflocken oder Papierschnitzel, die Beigabe von Bindemitteln zur Erhöhung der Bindekräfte der Rohstoffmasse. Alleinig die Kohäsionskräfte der Rohstoffmasse bzw. die faser- oder fadenförmigen Strukturen derselben reichen aus, daß die vorgesehenen Formen und Abmaße der Formkörper 19 nach dem Formgebungs- und Verdichtungsprozeß im wesentlichen beibehalten werden. Auch streifen- bzw. schnitzelförmig zerkleinertes Zellulosematerial, insbesondere Papier, behält durch den hohen Verdichtungsgrad die vorgesehene Form und Dichte nach dem Formgebungsund Verdichtungsprozeß bei. Gleiches gilt für Zellulosematerial, insbesondere Papier, welches bis zu einer Teilchengröße von in etwa 0,5 mm zerkleinert wurde und daher lockere Kleinstfaserstruktur aufweist bzw. insgesamt flaumig oder baumwollartig aufgebaut ist. Zu Formkörpern 19 verpreßtes Hanfmaterial behält insbesondere durch die Verankerung der einzelnen Fasern bzw. Fäden in Wirrlage die vorgesehene Form ohne Beigabe von Bindemitteln einwandfrei bei.

Demnach sind die verdichteten Formkörper 19 aus einer Wirrlage von Fasern und/oder Fäden und/oder Flocken und/oder Streifen gebildet bzw. bestehen diese aus in Wirrlage befindlichen Fasern, Fäden, Flocken und Streifen.

Bei der Verarbeitung der Rohstoffe 1 können auch Füllstoffe beigemengt werden. Als Füllstoff können dabei Sägespäne aus Holz, Kunststoff oder dgl. eingesetzt werden. Indem keine Bindemittel zur Bildung der hochverdichteten Formkörper 19 notwendig sind, werden die Herstellungskosten des Dämmstoffes 2 grundsätzlich niedrig gehalten.

Die Formkörper 19 aus Materialien mit geringer Wärmeleitfähigkeit können nachfolgend auf mehrere Arten 20 bis 23 mit jeweils unterschiedlich gereihten Verfahrensschritten 24 bis 26 weiterbehandelt werden. Der Verfahrensschritt 24 umfaßt dabei eine Abfüll- und/oder Verpakkungsvorrichtung 27, der Verfahrensschritt 25 die Lagerung an einem Lagerort 28, z.B. in einer Lagerhalle 29, und der Verfahrensschritt 26 beinhaltet den Transport der Formkörper 19 durch geeignete Transportmittel 30 wie z.B. LKW's 31, Schienenfahrzeuge oder dergleichen zu Dämmstoffhändlern oder direkt zu den Abnehmern des Dämmstoffs 2. Wahlweise kann dabei nach einer der Arten 20 bis 23 vorgegangen werden. Ein Vorgehen nach Art 20 beinhaltet dabei die Verpackung, die Lagerung und den Transport der Formkörper 19. Ein Vorgehen nach Art 21 umfaßt die Lagerung und den Transport der Formkörper 19 nach deren Bildung bzw. Erzeugung und ein Vorgehen nach Art 23 umfaßt lediglich den Transport der Formkörper 19 im Anschluß an den Formgebungs- und Verdichtungsprozeß des Rohstoffes 1.

Im Verfahrensschritt 24 werden die Formkörper 19 mittels der Abfüll- und/oder Verpackungsvorrichtung 27 zu entsprechenden Mengeneinheiten luft- und/oder feuchtigkeitsdicht verpackt. Als Verpackungsmaterial können sowohl Kunststoffolien als auch Papiersäcke verwendet werden.

Im Verfahrensschritt 25 werden die verpackten bzw. auch unverpackten Formkörper 19 in entsprechenden Räumlichkeiten, wie z.B. in Lagerhallen 29 des Produzenten, vorrätig gehalten.

Der Verfahrensschritt 26 umfaßt nunmehr den Transport der gegebenenfalls gelagerten und/oder zu größeren Einheiten verpackten Formkörper 19. Der Transport der Formkörper 19 kann auch - wie Art 23 zeigt - direkt nach der Formgebung und Verdichtung des Rohstoffes 1 zu Formkörpern 19 einsetzen.

Gleichfalls ist es - wie in strichlierten Linien angedeutet - auch möglich, die Formkörper 19 in unverpacktem Zustand zu lagern und erst anschließend für den Transport in bestimmte Mengen zu portionieren und zu verpacken.

Unabhängig davon ist es selbstverständlich auch möglich, die verdichteten Formkörper 19 als Schüttgut zu den Händlern zu transportieren und die Lagerung und/oder den weiteren Transport zu den Abnehmern bzw. den Vertrieb der Formkörper 19 bzw. des Dämmstoffes 2, beim Händler einzugliedern.

Die Formkörper 19 können je nach verwendetem Formwerkzeug 18 die Form von Pellets, Briketts oder Tabletten aufweisen. Insbesondere hat es sich als vorteilhaft erwiesen, den Rohstoff 1 zu scheibenförmigen Körpern mit einem Durchmesser von in etwa 4 cm und einer Höhe von in etwa 1 cm zu verpressen.

Der Transport des jeweils hochverdichteten, kompakten Dämmstoffes 2 in Art der Formkörper 19 erfolgt entweder direkt vom Dämmstoffproduzenten zu einem Einsatzort 32, z.B. einer Baustelle 33, oder gegebenenfalls - wie in strichlierten Linien angedeutet - zu einem Händler 34.

Bei Zwischenschaltung eines Händlers 34 erfolgt der weitere Vertrieb des Dämmstoffes 2 bevorzugt ebenfalls in verdichteter Form.

Am Einsatzort 32 wird der verdichtete Rohstoff 1 in Art der Formkörper 19 annähernd auf das Ausgangsvolumen des Rohstoffes 1 vor der Verdichtung umgeformt und in entsprechende Hohlräume in Decken oder Wänden von Gebäuden ein- bzw. aufgebracht. Diese Umwandlung der verdichteten Formkörper 19 in lockeren, großvolumigen Dämmstoff 2 mit geringer Dichte erfolgt mittels einer Umformvorrichtung 35, z.B. in Art eines Leichtgutzerkleinerers 36.

Die Formkörper 19 können mit der Umformvorrichtung 35 dabei solange aufgelockert bzw. zerfasert werden, bis das Volumen des somit gebildeten Dämmstoffes 2 kleiner ist, als das 1,5-fache bis 15-fache des Ausgangsvolumens des Rohstoffes 1, oder bis daß die Dichte des Dämmstoffes 2 nur mehr um 3 % bis 30 %, bevorzugt 10 % bis 20 %, höher ist, als die Dichte des Rohstoffes 1 der Formkörper 19 vor der Verdichtung. Unter Bezugnahme des Volumens werden die Formkörper 19 solange aufgelockert bzw. zerfasert, bis das Volumen des Dämmstoffes 2 in etwa um 3 % bis 20 %, bevorzugt 10 % bis 15 %, kleiner ist als das Volumen des Rohstoffes 1 der Formkörper 19 vor der Verdichtung. Die Formkörper 19 können auch solange aufgelockert bzw. zerfasert werden, bis die Dichte des Dämmstoffes 2 in etwa der Dichte des Rohstoffes 1 der Formkörper 19 vor der Verdichtung entspricht oder bis die Dichte des Dämmstoffes 2 kleiner ist als das 1,5-fache bis 15-fache der Dichte des Rohstoffes 1 vor der Verdichtung.

Die Umformung 37 bzw. die Zerhäckselung der Formkörper 19 und eine Ein- und/oder Aufbringung 38 bzw. Beförderung des umgeformten, filz- oder baumwollartigen Dämmstoffes 2 mit geringer Dichte erfolgt bevorzugt gleichzeitig durch die Umformvorrichtung 35. Diese Umformvorrichtung 35 umfaßt hierzu zumindest eine Aufnahmevorrichtung 39, z.B. einen Aufnahmetrichter oder Aufnahmebehälter, zur Speicherung bzw. Aufnahme zumindest einer Verpackungseinheit der verdichteten Formkörper 19. Die Formkörper 19 in der Aufnahmevorrichtung 39 gelangen in weiterer Folge zu einer Zerkleinerungsvorrichtung 40, welche die Formkörper 19 in lockeres, filzartiges Dämmaterial geringer Dichte umwandelt bzw. auffasert. Die Werkzeuge der Zerkleinerungsvorrichtung 40 sind dabei bevorzugt derart ausgebildet, daß bei der Auflockerung bzw. Auffaserung der Formkörper 19 ein entsprechender Luftstrom erzeugt wird, welcher einen Abtransport des flaumartigen Dämmstoffes 2 von der Umformvorrichtung 35 über einen Förderschlauch 41 zu den jeweiligen Hohlräumen bzw. Gefachen oder Flächen ermöglicht. Das Raumgewicht bzw. die Dichte der aus den Formkörpern 19 gebildeten Dämmschicht 42 beträgt, je nach dem verwendeten Rohstoff 1 und je nach Höhe der Dämmschicht 22, in etwa 30 kg/m3 bis 70 kg/m3.

Das Einbringen des großvolumigen Dämmstoffes 2 in Hohlräume erfolgt dabei bevorzugt durch Einblasen über einen entsprechenden Luftstrom der Umformvorrichtung 35. Das Aufbringen des großvolumigen Dämmstoffes 2 auf im wesentlichen horizontale Flächen kann auch durch Aufschütten desselben erfolgen. Das Aufbringen des großvolumigen, losen Dämmstoffes 2 auf Wände kann durch Befeuchtung desselben mit Bindemitteln, wie z.B. Wasser, im Sprühverfahren mit Sprühdüsen am Förderschlauch 41 erfolgen. Gleichfalls ist es möglich, dem Dämmstoff 2 während der Zerkleinerung der Formkörper 19 das Bindemittel zuzusetzen.

Der Dämmstoff 2 bildet sodann in den entsprechenden Hohlräumen, auf den Wänden oder Dekken eine winddichte Dämmschicht 42 zur Wärmedämmung einzelner Räume bzw. eines gesamten Gebäudekomplexes.

Selbstverständlich ist es auch möglich, Kunststoffe als Basismaterial für den Dämmstoff 2 einzusetzen, wenn diese aufgrund der Materialeigenschaften bzw. aufgrund der Form eine Volumensänderung bzw. Dichteänderung ermöglichen. Hierfür eignen sich verschiedene Kunststoffarten, wie z.B. Polyester, PVC, Polypropylen oder Acryl.

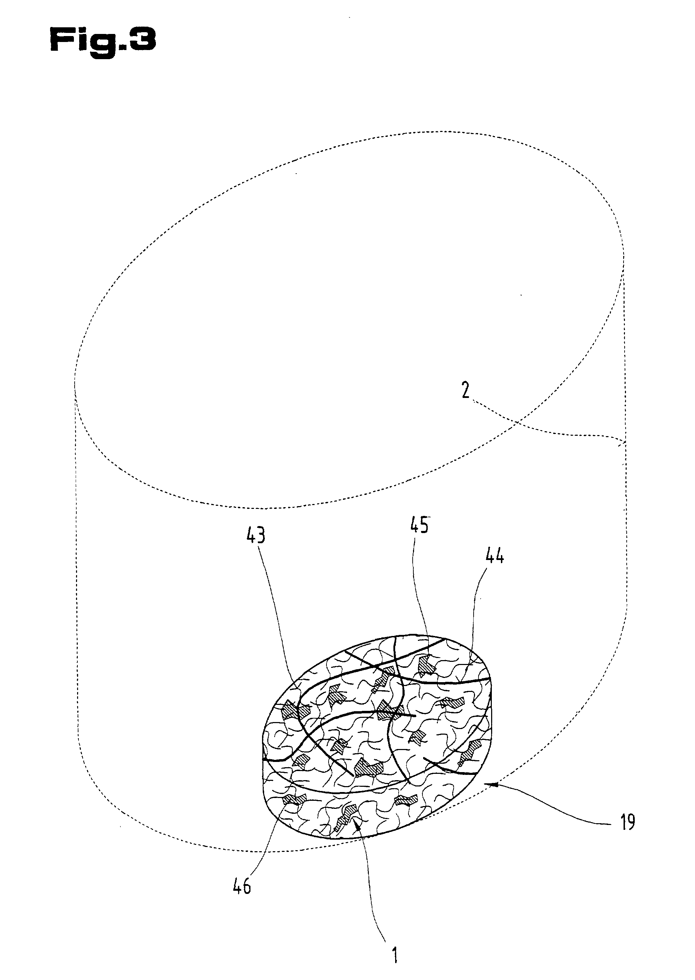

Fig. 3 zeigt ein Ausführungsbeispiel eines Formkörpers 19 aus verdichteten Natur- und/oder Kunststoffen. Der Formkörper 19 nimmt dabei annähernd die Form einer Tablette bzw. zylindrische Gestalt ein.

Der entsprechend dem vorhergehend beschriebenen Verfahren gebildete Formkörper 19 besteht dabei im wesentlichen aus Fasern 43 und/oder Fäden 44 mit eingeschlossenen bzw. eingebetteten Flocken 45, Streifen 46 oder aus sonstigen hackschnitzelförmigen Strukturen. Die Flocken 45 oder die Streifen 46 können dabei auch die Funktion eines Füllstoffes erfüllen und beispielsweise durch Sägespäne oder Kunststoffschnitzel gebildet werden. Diese Bestandteile des Formkörpers 19 können dabei alleinig oder untereinander kombiniert eingesetzt werden.

Diese Bestandteile mit Abmessungen von einigen zehntel Millimetern bis einigen Millimetern werden durch beliebige Stoffe mit möglichst geringer Wärmeleitfähigkeit und möglichst niedrigem Materialpreis gebildet. Dies sind vor allem natürliche Materialien bzw. Rohstoffe 1 wie Holzfaser, Zellulose 3, Stroh 4, Kokosfaser, Schilf, Hanf, Flachs, Baumwolle, Schafwolle 5 oder dergleichen.

Durch die hohe Verdichtung dieser Rohstoffe 1 entsprechend den vorhergehenden Beschreibungen verfilzt bzw. verankert sich die Rohstoffmasse und bildet die Formkörper 19 entsprechend der vorbestimmten Form. Die Formbeständigkeit der Formkörper 19 ist bei bestimmten Materialien, wie z.B. Hanf, Zellulosefaser und anderen Materialien, alleinig durch die hohe Verdichtung der Rohstoffmasse gegeben, wodurch sich die Beigabe von Bindemitteln zur Rohstoffmasse erübrigt. Auch Zellulose 3 in Kleinstfaserstruktur, d.h. mit Abmessungen im Zehntel-Millimeter Bereich, behält ohne die Beigabe von Bindemitteln - alleinig durch die hohe Verdichtung - die vorgesehene, größenreduzierte Form bei.

Durch die Auflockerung bzw. Auffaserung der verdichteten Formkörper 19 entsteht der lose, lockere Dämmstoff 2, welcher ein durch strichlierte Linien angedeutetes Volumen einnimmt. Das Volumensverhältnis zwischen dem verdichteten Formkörper 19 und dem daraus erzeugten Dämmstoff 2 beträgt in dieser Darstellung 1:10. Das Dichteverhältnis zwischen dem verdichteten Formkörper 19 und dem aufgelockerten, losen Dämmstoff 2 beträgt demzufolge 10:1. Die niedrige Dichte des aufgelockerten Dämmstoffes 2 begünstigt dabei das Wärmedämmvermögen desselben erheblich.

Selbstverständlich ist es zur Erzielung zusätzlicher Effekte, z.B. für hohe Körperschalldämmung oder für höheren Durchdringungsschutz von Hohlräumen, auch möglich, die verdichteten Formkörper 19 direkt in Hohlräume einzubringen bzw. auf im wesentlichen horizontale Flächen in Art von Schüttgut aufzuschütten.

Abschließend sei darauf hingewiesen, daß einzelne Schritte des zuvor beschriebenen Verfahrens in beliebiger Kombination bzw. in anderer Abfolge den Gegenstand von eigenständigen, erfindungsgemäßen Lösungen bilden können.

### Bezugszeichenaufstellung

- 1: Rohstoff
- 2: Dämmstoff
- 3: Zellulose
- 4: Stroh
- 5: Schafwolle

- 6: Zerkleinerungsvorrichtung
- 7: Shredder
- 8: Schneidvorrichtung
- 9: Beigabestelle
- 10: Behälter

- 11: Zusatzstoff
- 12: Borsäure
- 13: Borsalz
- 14: Mischvorrichtung
- 15: Rühr- oder Umwälzwerk

- 16: Formgebungs- und Verdichtungsvorrichtung
- 17: Presse
- 18: Formwerkzeug
- 19: Formkörper
- 20: Art

- 21: Art
- 22: Art
- 23: Art
- 24: Verfahrensschritt
- 25: Verfahrensschritt

- 26: Verfahrensschritt
- 27: Abfüll- und/oder Verpackungsvorrichtung
- 28: Lagerort
- 29: Lagerhalle
- 30: Transportmittel

- 31: LKW
- 32: Einsatzort
- 33: Baustelle
- 34: Händler
- 35: Umformvorrichtung

- 36: Leichtgutzerkleinerer
- 37: Umformung
- 38: Ein- und/oder Aufbringung
- 39: Aufnahmevorrichtung
- 40: Zerkleinerungsvorrichtung

- 41: Förderschlauch
- 42: Dämmschicht
- 43: Faser
- 44: Faden
- 45: Flocken

- 46: Streifen

## Patentansprüche

1. Verfahren zur Herstellung eines Dämmstoffes aus insbesondere natürlichen Rohstoffen, bevorzugt Zellulosematerial, wobei die Rohstoffe zerkleinert und gegebenenfalls mit feuerhemmenden Zusatzstoffen vermengt werden und wobei die losen Rohstoffe danach verdichtet und dabei in eine vorbestimmbare Form verbracht und nachfolgend gelagert und/oder transportiert werden, **dadurch gekennzeichnet, daß** loser, schnitzel- bzw. faserförmiger Rohstoff zu Formkörpern verpreßt wird, deren Dichte das 5-fache bis 30-fache, bevorzugt das 10-fache bis 25-fache, der Ausgangsdichte des losen Rohstoffes und/oder deren Volumen zwischen 3 % bis 20 %, bevorzugt 4 % bis 10 %, des Ausgangsvolumens des losen Rohstoffes beträgt, sodaß alleinig durch die hohe Verdichtung der Rohstoffmasse eine Formbeständigkeit der Formkörper erreicht wird, wodurch die Beigabe von Bindemittel erübrigt ist, worauf diese Formkörper zur Bildung des Dämmstoffes auf eine vergleichsweise geringere Dichte und/oder ein vergleichsweise größeres Volumen zerteilt und aufgefasert werden.

2. Verfahren nach Anspruch 1, **dadurch gekennzeichnet, daß** die Formkörper so lange aufgelockert bzw. zerfasert werden, bis das Volumen des Dämmstoffes in etwa dem Volumen des Rohstoffes der Formkörper vor der Verdichtung entspricht.

3. Verfahren nach Anspruch 1, **dadurch gekennzeichnet, daß** die Formkörper so lange aufgelockert bzw. zerfasert werden, bis das Volumen des Dämmstoffes in etwa um 3 % bis 20 %, bevorzugt 10 % bis 15 %, kleiner ist als das Volumen des Rohstoffes der Formkörper vor der Verdichtung.

4. Verfahren nach einem oder mehreren der vorhergehenden Ansprüche, **dadurch gekennzeichnet, daß** die Formkörper so lange aufgelockert bzw. zerfasert werden, bis die Dichte des Dämmstoffes nur mehr um 3 % bis 30 %, bevorzugt 10 % bis 20 %, höher ist als die Dichte des Rohstoffes der Formkörper vor der Verdichtung.

5. Verfahren nach einem oder mehreren der Ansprüche 1 bis 3, **dadurch gekennzeichnet, daß** die Formkörper so lange aufgelockert bzw. zerfasert werden, bis die Dichte des Dämmstoffes in etwa der Dichte des Rohstoffes der Formkörper vor der Verdichtung entspricht.

6. Verfahren nach einem oder mehreren der vorhergehenden Ansprüche, **dadurch gekennzeichnet, daß** als Rohstoffe Natur- und/oder Kunststoffe eingesetzt werden.

7. Verfahren nach einem oder mehreren der vorhergehenden Ansprüche, **dadurch gekennzeichnet, daß** die Rohstoffe zu Fasern und/oder Fäden zerkleinert werden.

8. Verfahren nach einem oder mehreren der vorhergehenden Ansprüche, **dadurch gekennzeichnet, daß** die Rohstoffe zu Flocken und/oder Streifen zerkleinert werden.

9. Verfahren nach einem oder mehreren der vorhergehenden Ansprüche, **dadurch gekennzeichnet, daß** als Rohstoffe Zellulose und/oder Kokosfaser und/oder Schilf und/oder Stroh eingesetzt werden.

10. Verfahren nach einem oder mehreren der vorhergehenden Ansprüche, **dadurch gekennzeichnet, daß** als Rohstoffe Hanf und/oder Flachs und/oder Baumwolle und/oder Schafwolle eingesetzt werden.

11. Verfahren nach einem oder mehreren der vorhergehenden Ansprüche, **dadurch gekennzeichnet, daß** als Rohstoffe Polyester, PVC, Polypropylen oder Acryl verwendet werden.

12. Verfahren nach einem oder mehreren der vorhergehenden Ansprüche, **dadurch gekennzeichnet, daß** die Formkörper zerhäckselt werden.

13. Verfahren nach einem oder mehreren der vorhergehenden Ansprüche, **dadurch gekennzeichnet, daß** vor dem Verdichten des Rohstoffes und/oder vor dem Zerkleinern der Festkörper dem Rohstoff bzw. den Festkörpern die Zusatzstoffe zugesetzt werden.

14. Verfahren nach einem oder mehreren der vorhergehenden Ansprüche, **dadurch gekennzeichnet, daß** die Zusatzstoffe durch hydrophobe Mittel gebildet werden.

15. Verfahren nach einem oder mehreren der vorhergehenden Ansprüche, **dadurch gekennzeichnet, daß** die Zusatzstoffe durch feuerhemmende Materialien, z.B. Bor oder Melamin, gebildet werden.

16. Verfahren nach einem oder mehreren der vorhergehenden Ansprüche, **dadurch gekennzeichnet, daß** ein Teil der Rohstoffe brandhemmend oder nicht entflammbar ist und/oder mit einer brandhemmenden oder nicht entflammenden Beschichtung versehen wird.

17. Verfahren nach einem oder mehreren der vorhergehenden Ansprüche, **dadurch gekennzeichnet, daß** dem Rohstoff bzw. dem Dämmstoff Herbizide und/oder Pestizide zugesetzt werden.

18. Verfahren nach einem oder mehreren der vorhergehenden Ansprüche, **dadurch gekennzeichnet, daß** der verdichtete Dämmstoff bzw. die Formkörper luftund/oder feuchtigkeitsdicht verpackt werden.

19. Verfahren nach einem oder mehreren der vorhergehenden Ansprüche, **dadurch gekennzeichnet, daß** die Umformung der Formkörper in den Dämmstoff durch Auffasern bzw. Zerhäckseln erfolgt.

20. Verfahren nach einem oder mehreren der vorhergehenden Ansprüche, **dadurch gekennzeichnet, daß** der durch Auffasern bzw. Zerhäckseln hergestellte, lose Dämmstoff durch einen Luftstrom in Hohlräume eingeblasen oder auf zu isolierende Flächen aufgetragen wird.

21. Verfahren nach einem oder mehreren der vorhergehenden Ansprüche, **dadurch gekennzeichnet, daß** dem Dämmstoff während dem Auffasern bzw. Zerhäckseln der Formkörper ein Bindemittel, z.B. Wasser, zugesetzt wird.

22. Verfahren nach Anspruch 21, **dadurch gekennzeichnet, daß** der Dämmstoff während dem Austritt aus einer Sprühdüse mit dem Bindemittel versetzt wird.

23. Verfahren nach einem oder mehreren der vorhergehenden Ansprüche, **dadurch gekennzeichnet, daß** der Rohstoff beim Herstellen der Formkörper zu Pellets, Briketts oder Tabletten geformt wird.

24. Verfahren nach einem oder mehreren der vorhergehenden Ansprüche, **dadurch gekennzeichnet, daß** als Zusatzstoffe Borsalze, Borsäure, Kalk, Steinmehl, Mineralöle, Silikone, Wachse oder eine Mischung davon eingesetzt werden.

25. Verfahren nach einem oder mehreren der vorhergehenden Ansprüche, **dadurch gekennzeichnet, daß** die Formkörper so lange zerteilt und aufgefasert werden, bis das Raumgewicht bzw. die Dichte des aus dem Formkörper gebildeten Dämmstoffes 30 kg/m3 bis 70 kg/m3 beträgt.

26. Verfahren nach einem oder mehreren der vorhergehenden Ansprüche, **dadurch gekennzeichnet, daß** als Volumensverhältnis zwischen dem Formkörper und dem damit gebildeten Dämmstoff 1:5 bis 1:30, bevorzugt 1:10 bis 1:25 eingehalten wird.

27. Verfahren nach einem oder mehreren der vorhergehenden Ansprüche, **dadurch gekennzeichnet, daß** als Verhältnis der Dichte des Formkörpers zur Dichte des aus diesem Formkörper gebildeten Dämmstoffes 5:1 bis 30:1, bevorzugt 10:1 bis 25:1 eingestellt wird.

28. Formkörper aus insbesondere natürlichen Rohstoffen für die Bildung einer Dämmschicht, **dadurch gekennzeichnet, daß** das Raumgewicht bzw. die Dichte des aus losem Zellulosematerial verpreßten Formkörpers (19) zwischen 400 kg/m3 und 900 kg/m3 beträgt und der Förmkörper (19) alleinig durch die hohe Zellulosematerialdichte die vorgesehene, gegenüber dem losen Rohstoff größenreduzierte Form beibehält.

29. Formkörper nach Anspruch 28, **dadurch gekennzeichnet, daß** der Formkörper (19) aus einer Wirrlage von Fasern (43) und/oder Fäden (44) und/oder Flocken (45) und/oder Streifen (46) bzw. aus in Wirrlage befindlichen Fasern (43), Fäden (44), Flocken (45) und Streifen (46) besteht.

30. Formkörper nach Anspruch 28 oder 29, **dadurch gekennzeichnet, daß** dieser aus Natur- und/oder Kunststoffen besteht.

31. Formkörper nach einem oder mehreren der Ansprüche 28 bis 30, **dadurch gekennzeichnet, daß** der Rohstoff (1) durch Zellulose (3) und/oder Kokosfaser und/oder Schilf und/oder Stroh (4) gebildet ist.

32. Formkörper nach einem oder mehreren der Ansprüche 28 bis 31, **dadurch gekennzeichnet, daß** der Rohstoff (1) durch Hanf und/oder Flachs und/oder Baumwolle und/oder Schafwolle (5) gebildet ist.

## Claims

1. Method of producing an insulating material, in particular from natural raw materials, preferably cellulose material, whereby the raw materials are chopped, and blended with fire-retardant additives if necessary, and the loose raw materials are then compressed and formed to a predeterminable shape before being stored and/or transported, **characterised in that** the loose shreds or fibres of raw material are pressed into compressed solids, the density of which is 5 times to 30 times, preferably 10 times to 25 times the initial density of the loose raw material and/or the volume thereof is between 3% and 20%, preferably 4% to 10%, of the initial volume of the loose raw material so that the high compression of the mass of raw material alone imparts a dimensional stability to the compressed solid, obviating the need to add binders, after which these compressed solids are deflocculated and the fibres separated to obtain a comparably lower density and/or a comparably larger volume to produce the insulating material.

2. Method as claimed in claim 1, **characterised in that** the compressed solids are aerated or the fibres separated until the volume of the insulating material corresponds more or less to the volume of the raw material of the compressed solid prior to compression.

3. Method as claimed in claim 1, **characterised in that** the compressed solids are aerated or the fibres separated until the volume of the insulating material is approximately 3% to 20%, preferably 10 to 15% smaller than the volume of the raw material of the compressed solid prior to compression.

4. Method as claimed in one or more of the preceding claims, **characterised in that** the compressed solids are aerated or the fibres separated until the density of the insulating material is higher than the density of the raw material of the compressed solid prior to compression by only approximately 3% to 30%, preferably 10% to 20%.

5. Method as claimed in one or more of claims 1 to 3, **characterised in that** the compressed solids are aerated or the fibres loosened until the density of the insulating material substantially corresponds to the density of the raw material of the compressed solid prior to compression.

6. Method as claimed in one or more of the preceding claims, **characterised in that** natural and/or synthetic materials are used as raw materials.

7. Method as claimed in one or more of the preceding claims, **characterised in that** the raw materials are chopped into fibres and/or filaments.

8. Method as claimed in one or more of the preceding claims, **characterised in that** the raw materials are chopped into flocks and/or strips.

9. Method as claimed in one or more of the preceding claims, **characterised in that** cellulose and/or coconut fibres and/or reed and/or straw are used as raw materials.

10. Method as claimed in one or more of the preceding claims, **characterised in that** hemp and/or flax and/or cotton and/or sheep's wool are used as raw materials.

11. Method as claimed in one or more of the preceding claims, **characterised in that** polyester, PVC, polypropylene or acrylic are used as raw materials.

12. Method as claimed in one or more of the preceding claims, **characterised in that** the compressed solids are broken up.

13. Method as claimed in one or more of the preceding claims, **characterised in that** the additives are added to the raw material or solid masses prior to compressing the raw material and/or prior to breaking up the solid bodies.

14. Method as claimed in one or more of the preceding claims, **characterised in that** the additives are hydrophobic substances.

15. Method as claimed in one or more of the preceding claims, **characterised in that** the additives are fire-retardant materials, e.g. boron or melamine.

16. Method as claimed in one or more of the preceding claims, **characterised in that** some of the raw materials are fire-retardant or non-flammable and/or are provided with a fire-retardant or non-flammable coating.

17. Method as claimed in one or more of the preceding claims, **characterised in that** herbicides and/or pesticides are added to the raw material or the insulating material.

18. Method as claimed in one or more of the preceding claims, **characterised in that** the compacted insulating material or the compressed solids are packed so as to be airtight and/or damp-proof.

19. Method as claimed in one or more of the preceding claims, **characterised in that** the compressed solids are transformed into the insulating material by separating the fibres or breaking it up.

20. Method as claimed in one or more of the preceding claims, **characterised in that** the loose insulating material produced by separating the fibres or breaking it up is blasted into cavities by an air flow or applied to surfaces to be insulated.

21. Method as claimed in one or more of the preceding claims, **characterised in that** a binding agent, e.g. water, is added to the insulating material whilst separating the fibres or breaking up the compressed solids.

22. Method as claimed in claimed in claim 21, **characterised in that** the insulating material is displaced with the binding agent as it leaves a spray nozzle.

23. Method as claimed in one or more of the preceding claims, **characterised in that** the raw material is shaped into pellets, briquettes or tablets as the compressed solids are produced.

24. Method as claimed in one or more of the preceding claims, **characterised in that** boron salts, boric acid, lime, ground stone , mineral oils, silicones, waxes or a mixture thereof are used as additives.

25. Method as claimed in one or more of the preceding claims, **characterised in that** the compressed solids are broken up and the fibres separated until the weight by volume or the density of the insulating material formed from the compressed solids is 30 kg/m³ to 70 kg/m³.

26. Method as claimed in one or more of the preceding claims, **characterised in that** the ratio by volume of the compressed solid to the insulating material formed therefrom is kept to within 1:5 to 1:30, preferably 1:10 to 1:25.

27. Method as claimed in one or more of the preceding claims, **characterised in that** the ratio of the density of the compressed solid to the density of the insulating material formed therefrom is set to 5:1 to 30:1, preferably 10:1 to 25:1.

28. Compressed solid of natural raw materials, in particular for forming an insulating layer, **characterised in that** the weight by volume or density of the compressed solid (19) formed by compressing the loose cellulose material is between 400 kg/m³ and 900 kg/m³ and the resultant form of the compressed solid (19), the size of which is reduced as compared with that of the loose raw material, is maintained solely by the high density of the cellulose material.

29. Compressed solid as claimed in claim 28, **characterised in that** the compressed solid (19) consists of a layer of tangled fibres (43) and/or filaments (44) and/or flocks (45) and/or strips (46) or consists of fibres (43), filaments (44), flocks (45) and strips (46) in a tangled layer.

30. Compressed solid as claimed in claim 28 or 29, **characterised in that** it consists of natural and/or synthetic materials.

31. Compressed solid as claimed in one or more of claims 28 to 30, **characterised in that** the raw material (1) is cellulose (3) and/or coconut fibre and/or reed and/or straw (4).

32. Compressed solid as claimed in one or more of claims 28 to 31, **characterised in that** the raw material (1) is hemp and/or flax and/or cotton and/or sheep's wool (5).

## Revendications

1. Procédé de fabrication d'une matière calorifuge à partir de matières premières notamment naturelles, de préférence à partir d'une matière de cellulose, où les matières premières sont fragmentées et le cas échéant mélangées avec des produits d'addition ignifuges, et où les matières premières lâches sont ensuite compactées et amenées ainsi en une forme prédéfinissable et sont ensuite stockées et/ou transportées, **caractérisé en ce qu'**une matière première lâche, en forme de petits bouts ou de fibres est comprimée en des corps formés dont la densité représente 5 fois à 30 fois, de préférence 10 fois à 25 fois de la densité de départ de la matière première lâche et/ou du volume de celle-ci entre 3% à 20%, de préférence 4% à 10%, du volume initial de la matière première lâche de telle sorte qu'une stabilité dimensionnelle des corps formés est obtenue uniquement par le compactage élevé de la masse de matière première par quoi l'addition d'un liant est superflue, à la suite de quoi ces corps formés, pour former la matière calorifuge, sont divisés et effilochés en une densité comparativement plus réduite et/ou un volume comparativement plus grand.

2. Procédé selon la revendication 1, **caractérisé en ce que** les corps formés sont désagrégés et effilochés aussi longtemps jusqu'à ce que le volume de la matière calorifuge correspond approximativement au volume de la matière première des corps formés avant le compactage.

3. Procédé selon la revendication 1, **caractérisé en ce que** les corps formés sont désagrégés et effilochés aussi longtemps jusqu'à ce que le volume de la matière calorifuge soit d'environ 3% à 20%, de préférence 10% à 15% plus petit que le volume de la matière première des corps formés avant le compactage.

4. Procédé selon l'une ou plusieurs des revendications précédentes, **caractérisé en ce que** les corps formés sont désagrégés et effilochés aussi longtemps jusqu'à ce que la densité de la matière calorifuge soit seulement 3% à 30%, de préférence 10% à 20% plus élevée que la densité de la matière première des corps formés avant le compactage.

5. Procédé selon l'une ou plusieurs des revendications 1 à 3, **caractérisé en ce que** les corps formés sont désagrégés respectivement effilochés aussi longtemps jusqu'à ce que la densité de la matière calorifuge correspond à peu près à la densité de la matière première des corps formés avant le compactage.

6. Procédé selon l'une ou plusieurs des revendications précédentes, **caractérisé en ce qu'**on utilise comme matières premières des matières naturelles et/ou synthétiques.

7. Procédé selon l'une ou plusieurs des revendications précédentes, **caractérisé en ce que** les matières premières sont fragmentées en fibres et/ou fils.

8. Procédé selon l'une ou plusieurs des revendications précédentes, **caractérisé en ce que** les matières premières sont fragmentées en flocons et/ou bandes.

9. Procédé selon l'une ou plusieurs des revendications précédentes, **caractérisé en ce qu'**on utilise comme matières premières de la cellulose et/ou des fibres de coco et/ou du jonc et/ou de la paille.

10. Procédé selon l'une ou plusieurs des revendications précédentes, **caractérisé en ce qu'**on utilise comme matières premières du chanvre et/ou du lin et/ou du coton et/ou de la laine de mouton.

11. Procédé selon l'une ou plusieurs des revendications précédentes, **caractérisé en ce qu'**on utilise comme matières premières du polyester, du PVC, du polypropylène ou de l'acryle.

12. Procédé selon l'une ou plusieurs des revendications précédentes, **caractérisé en ce que** les corps formés sont hâchés.

13. Procédé selon l'une ou plusieurs des revendications précédentes, **caractérisé en ce qu'**avant le compactage de la matière première et/ou avant la fragmentation des corps solides, on ajoute à la matière première respectivement aux corps solides, les produits d'addition.

14. Procédé selon l'une ou plusieurs des revendications précédentes, **caractérisé en ce que** les produits d'addition sont formés par des moyens hydrophobes.

15. Procédé selon l'une ou plusieurs des revendications précédentes, **caractérisé en ce que** les produits d'addition sont formés par des matières ignifuges, par exemple par du bore ou de la mélamine.

16. Procédé selon l'une ou plusieurs des revendications précédentes, **caractérisé en ce qu'**une partie des matières premières est ignifuge ou bien non inflammable et/ou est pourvue d'un revêtement ignifuge ou non inflammable.

17. Procédé selon l'une ou plusieurs des revendications précédentes, **caractérisé en ce qu'**on ajoute à la matière première respectivement à la matière calorifuge des herbicides et/ou pesticides.

18. Procédé selon l'une ou plusieurs des revendications précédentes, **caractérisé en ce que** la matière calorifuge compactée respectivement les corps formés sont emballés d'une manière étanche à l'air et/ou à l'humidité.

19. Procédé selon l'une ou plusieurs des revendications précédentes, **caractérisé en ce que** la déformation des corps formés en matière calorifuge a lieu par effilochage respectivement hâchage.

20. Procédé selon l'une ou plusieurs des revendications précédentes, **caractérisé en ce que** la matière colorifuge lâche, réalisée par effilochage respectivement hâchage, est soufflée par un flux d'air dans des espaces creux ou bien est appliqué sur des surfaces à isoler.

21. Procédé selon l'une ou plusieurs des revendications précédentes, **caractérisé en ce qu'**on ajoute à la matière calorifuge pendant l'effilochage respectivement le hâchage des corps formés un liant, par exemple de l'eau.

22. Procédé selon la revendication 21, **caractérisé en ce que** la matière calorifuge est mélangée avec le liant pendant la sortie d'une buse de pulvérisation.

23. Procédé selon l'une ou plusieurs des revendications précédentes, **caractérisé en ce que** la matière première, lors de la fabrication des corps formés, est formée en pellets, briquettes ou tablettes.

24. Procédé selon l'une ou plusieurs des revendications précédentes, **caractérisé en ce qu'**on utilise comme produits d'addition des sels de bore, de l'acide de bore, de la chaux, de la chaux naturelle en poudre, des huiles minérales, du silicone, des cires ou un mélange de ceux-ci.

25. Procédé selon l'une ou plusieurs des revendications précédentes, **caractérisé en ce que** les corps formés sont divisés et effilochés aussi longtemps jusqu'à ce que le poids spécifique respectivement la densité de la matière calorifuge formée à partir du corps formé est de 30 kg/m3 à 70 kg/m3.

26. Procédé selon l'une ou plusieurs des revendications précédentes, **caractérisé en ce qu'**on utilise comme rapport de volume entre le corps formé et la matière calorifuge formée avec celui-ci 1:5 à 1:30, de préférence 1:10 à 1:25.

27. Procédé selon l'une ou plusieurs des revendications précédentes, **caractérisé en ce qu'**on établit comme rapport de la densité du corps formé à la densité de la matière calorifuge formée à partir de ce corps formé 5:1 à 30:1, de préférence 10:1 à 25:1.

28. Corps formé à partir de matières premières notamment naturelles pour la formation d'une couche calorifuge, **caractérisé en ce que** le poids spécifique respectivement la densité du corps formé (19) formé par compression d'une matière cellulosique lâche est compris entre 400 kg/m3 et 900 kg/m3, et que le corps formé (19) conserve la forme prévue, réduite en grandeur par rapport à la matière première lâche, uniquement par la densité élevée de la matière cellulosique.

29. Corps formé selon la revendication 28, **caractérisé en ce que** le corps formé (19) est constitué d'une couche entremêlée de fibres (43) et/ou de fils (44) et/ou de flocons (45) et/ou de bandes (46) respectivement de fibres (43), de fils (44), de flocons (45) et de bandes (46) se trouvant dans une couche entremêlée.

30. Corps formé selon la revendication 28 ou 29, **caractérisé en ce que** celui-ci est constitué de matières naturelles et/ou synthétiques.

31. Corps formé selon l'une ou plusieurs des revendications 28 à 30, **caractérisé en ce que** la matière première (1) est constituée par de la cellulose (3) et/ou des fibres de coco et/ou de jonc et/ou de paille (4).

32. Corps formé selon l'une ou plusieurs des revendications 28 à 31, **caractérisé en ce que** la matière première (1) est formée par du chanvre et/ou du lin et/ou du coton et/ou de la laine de mouton (5).
